# EUROPEAN PATENT APPLICATION

(11) **EP 2 202 969 A2**
(43) Date of publication of application: **30.06.2010**
(21) Application number: 09014810.7
(22) Date of filing: 27.11.2009
(51) Int. Cl.: H04N 7/14

(54) **Communication apparatus and control device to generate control data**

(30) Priority: 24.12.2008 KR 20080133497
(71) Applicant: LG - Nortel Co., Ltd., 679, Yeoksam-dong Gangnam-gu Seoul (KR)
(72) Inventor: Moon, Min Woo, Gunpo-si Gyeonggi-do 435-757 (KR); Kwon, Sang Hoon, Seoul 151-017 (KR)
(74) Representative: Katérle, Axel

(57) **Abstract**

A communication apparatus may include a camera for obtaining an image and providing image data, and a control device for generating an input image descriptor from the image data, for determining whether the generated input image descriptor corresponds to a pre-stored reference image descriptor, and for generating control data for controlling the communication apparatus based on the determination.

## Description

This application claims priority from Korean Patent Application No. 10-2008-0133497, filed December 24, 2008, the subject matter of which is incorporated herein by reference.

### BACKGROUND

### 1. Field

Embodiments of the present invention may relate to a communication apparatus equipped with a camera. Embodiments may relate to a communication apparatus that uses images obtained from a camera to control operations thereof.

### 2. Background

As information techniques develop, a need has arisen for a communication apparatus that services video communication along with voice communication. Accordingly, a video communication apparatus using the Internet or a public switched telephone network (PSTN has come into use.

A next generation of mobile communications may enable audio, video and data communication (e.g. CDMA 2000 and W-CDMA). With the development of this technology, a video communication apparatus may perform high-speed video and data communication along with audio communication. A video communication apparatus equipped with a digital camera module for implementing a digital camera has been especially widespread. This video communication apparatus may take a scene or movie and record it using a camera.

However, image data obtained from a camera may be used only for communicating with another video communication apparatus or for storing in storage to view at a later time.

### BRIEF DESCRIPTION OF THE DRAWINGS

Arrangements and embodiments may be described in detail with reference to the following drawings in which like reference numerals refer to like elements and wherein:

FIG. 1 illustrates an arrangement of a communication apparatus according to an example embodiment of the present invention;

FIG. 2 illustrates a detailed arrangement of a control device as shown in FIG. 1; and

FIG. 3 is a flow chart showing a control method performed in a communicating apparatus when a call setup request message is received from another communication apparatus.

### DETAILED DESCRIPTION

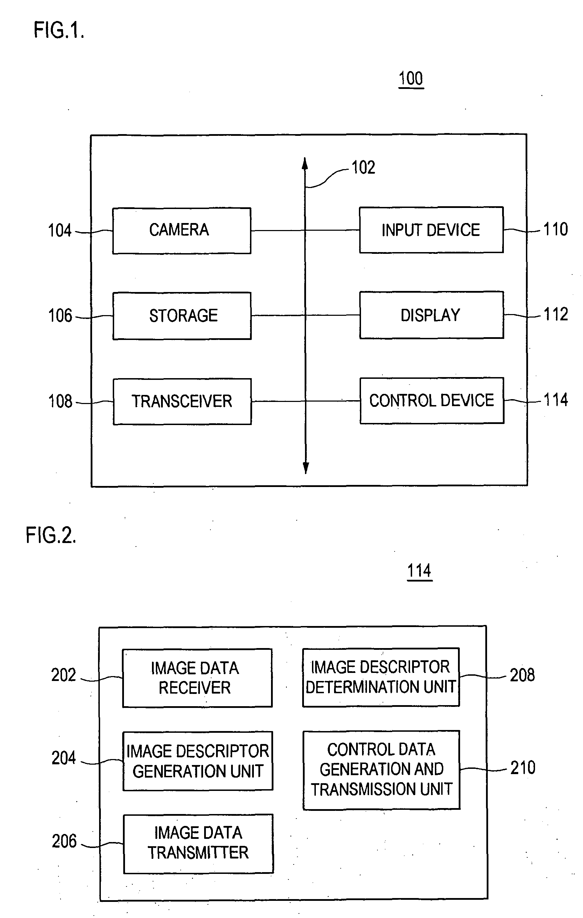

FIG. 1 illustrates an arrangement of a communication apparatus 100 according to an example embodiment of the present invention. Other embodiments and configurations may also be provided. The communication apparatus 100 may be, but is not limited to, a Session Initiation Protocol (SIP) video communication apparatus that transmits and receives digital signals of audio and video using SIP. The elements shown in FIG. 1 are illustrative and the elements may be integrated, separated and/or abbreviated. The relationship between the elements may also be modified.

As shown in FIG. 1, a communication apparatus 100 may include a bus 102 interconnecting elements in the communication apparatus 100. The bus 102 may represent one or more of any of several types of bus structures such as a memory bus, a memory controller bus, a peripheral bus, and a processor or local bus using any of a variety of bus architecture. By way of example, such architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnects(PCI) bus also known as a Mezzanine bus, a PCI Express, etc. The elements in the communication apparatus 100 may communicate data to one another via the bus 102. Embodiments of the present invention are not limited to this description.

As shown in FIG. 1, the communication apparatus 100 may include a camera 104. The camera 104 may be coupled to the bus 102 and may communicate data via the bus 102 with other elements in the communication apparatus 100. The camera 104 may receive control data via the bus 102 from a control device 114, as will be described below. The camera 104 may be powered on automatically or manually based on the received control data.
The camera 104, which is powered on automatically or manually, may obtain a stationary image or movie data that is associated with a user of the communication apparatus 100. As one example, the movie data obtained from the camera 104 may include a series of motions taken by the user. The stationary image or movie data obtained from the camera 104 may be transmitted via the bus 102 to other elements in the communication apparatus 100. FIG. 1 shows that the camera 104 is located within the communication apparatus 100. However, the camera 104 may also be located outside of the communication apparatus 100.

The communication apparatus 100 may additionally include a storage 106 (or memory). The storage 106 may include removable and non-removable storage, volatile and non-volatile storage, such as RAM, ROM, flash memory and/or a hard disk. The storage 106 may be coupled to the bus 102 to receive data via the bus 102 from other elements in the communication apparatus 100. The storage 106 may store the received data. For example, the storage 106 may receive image data via the bus 102 from the camera 104 or the control device 114 and may store the received image data. The storage 106 also may store computer instructions for controlling each element of the communication apparatus 100. The storage 106 may deliver the data stored therein, such as image data or computer instructions, to other elements in the communication apparatus 100 via the bus 102.

The communication apparatus 100 may also include a transceiver 108. The transceiver 108 may be coupled to a network via an interface (not shown). The transceiver 108 may allow the communication apparatus 100 to communicate a signal, such as a control signal, an image signal and/or an audio signal, with another communication apparatus via the network. The transceiver 108 may receive a call setup request message from another communication apparatus. For example, if the communication apparatus 100 is a SIP video communication apparatus, the transceiver 108 may receive an INVITE message. When the transceiver 108 receives the call setup request message, the transceiver 108 may transmit data to the control device 114, so that the control device 114 is informed of the receipt of the call setup request message. If the network is a public switched telephone network (PSTN), the transceiver 108 may use a PSTN interface in H.324 protocol for communicating audio, video and data. If the network is the Internet, the transceiver 108 may use an Internet Protocol Network (IPN) interface in H.323 protocol for transmitting multimedia videoconference data via a packet switching system. If the network is an IMT-2000 network, the transceiver 108 may use an IPN interface in a Session Initiation Protocol (SIP) for communicating a digital signal of audio and video by use of a Session Initiation Protocol Uniform Resource Locator (SIP URL), which may function like an electronic mail address.

The communication apparatus 100 may further include an input device 110.
The input device 110 may include a touch screen and/or key pad, for example. The key pad may include numerical input keys, character input keys, send/answer keys, an automatic answer key, a call transfer key, an end key and/or any functional keys. A user may directly input various control data to the communication apparatus 100 using the keys of the input device 110. The input device 110 may be activated when the communication apparatus 100 receives a call setup request message, and may wait until a user input response to the call setup request message by the input device 110 is received. If the input device 110 detects a response to the call setup request message input from the user, the input device 110 may deliver the response to the control device 114. For example, if the user inputs (or presses) an answer key, an automatic answer key and/or a call transfer key on the input deice 110, the input device 110 may deliver a signal to the control device 114 via the bus 102, so that the control device 114 may be informed of the input of the keys. FIG. 1 shows that the input device 110 is located within the communication apparatus 100. However, if the communication apparatus 100 is coupled to a wireless terminal via a personal area network (PAN), such as Bluetooth, the input device 110 may be located in the wireless terminal (or outside the terminal).

The communication apparatus 100 may further include a display 112. The display 112 may be a liquid crystal display, a plasma display and/or a light emitting diode (LED) display, for example. The display 112 may be coupled to the bus 102 and may communicate data with other elements of the communication apparatus 100 via the bus 102. For example, the display 112 may receive the image data obtained from the camera 104 via the bus 102 and may display the received image data on a screen. If the transceiver 108 receives image data from another communication apparatus via a network, the received image data may be delivered to the display 112 and the display 112 may display the image data on the screen. The display 112 may also receive image data from the storage 106 via the bus 102 and may display the image data on the screen. The display 112 may also display text on the screen. For example, the text displayed on the screen may indicate that the user of the communication apparatus 100 is requested to take a certain posture.

The communication apparatus 100 may include the control device 114. The control device 114 may be coupled to the bus 102 and may communicate data to other elements of the communication apparatus 100 via the bus 102. For example, the control device 114 may receive one or more computer instructions from the storage 106 via the bus 102. The control device 114 may execute the computer instructions so as to control operations of the communication apparatus 100. The control device 114 may receive the call setup request message from the transceiver 108 via the bus 102. Upon receiving the call setup request message, the control device 114 may transmit pre-stored (or pre-set) control data to components (or elements) of the communication apparatus 100. For example, the control device 114 may transmit control data to the camera 104 via the bus 102 so that the camera 104 may power on automatically. The control data may be transmitted from the control device 114 to the input device 110 via the bus 102 so that the input device 110 may be activated to wait for a certain user's input in response to a call setup request message. The control device 114 may further receive image data obtained from the camera 104 via the bus 102 and may process the obtained image data to obtain an image descriptor. In one mode, the control device 114 may set the obtained image descriptor as a reference image descriptor and deliver the reference image descriptor to the storage 106 via the bus 102. In another mode, the control device 114 may set the obtained image descriptor as an input image descriptor and use the input image descriptor in a comparison process to generate control data for controlling components (or elements) of the communication apparatus 100. An explanation about obtaining the reference image descriptor or the input image descriptor, comparing the input image descriptor with the reference image descriptor and generating control data by the control device 114 may be provided below with reference to FIG. 2.

FIG. 2 illustrates a detailed arrangement of the control device 114. Elements shown in FIG. 2 are illustrative, and the elements may be integrated, separated and/or abbreviated. The relationship between elements may also be modified. For ease of discussion, only some of the elements of the control device 114 are shown in FIG. 2. Other elements may also be included in the control device 114.

As shown in FIG. 2, the control device 114 may include an image data receiver 202, an image descriptor generation unit 204, an image data transmitter 206, an image descriptor determination unit 208 and a control data generation and transmission unit 210. The image data receiver 202 may receive image data transmitted from other elements of the communication apparatus 100 via the bus 102. The image data receiver 202 may receive image data from the camera 104 via the bus 102. The image data receiver 202 may also receive image data from the storage 106 via the bus 102.

The image descriptor generation unit 204 may receive image data from the image data receiver 202 and may generate an image descriptor from the received image data (or based on the received image data). The image descriptor generation unit 204 may divide the image data into a plurality of partial image data and may extract characteristic information from each part of the image data, such as a characteristic vector, characteristic brightness information and/or characteristic color information (e.g., Color Histogram or Color Correlogram), etc. The image descriptor generation unit 204 may generate image descriptors by combining characteristic information from each part of the image data using a given function. A given function may calculate color distribution of the partial image data and/or a possibility of color change distribution from among the partial image data for a set distance. The techniques as described herein for generating image descriptors are merely illustrative, as a wide variety of other techniques may be used for generating image descriptors.

According to the mode of the communication apparatus 100, the image descriptor generation unit 204 may also set the generated image descriptor as a reference image descriptor or an input image descriptor. For example, if the communication apparatus 100 is in a reference image descriptor set mode, the image descriptor generation unit 204 may set the generated image descriptor as a reference image descriptor. A reference image descriptor may represent the image descriptor that is to be compared with the input image descriptor. On the other hand, if the communication apparatus 100 is in a general setup mode, the image descriptor generation unit 204 may set the generated image descriptor as an input image descriptor.

The image data transmitter 206 may transmit the reference image descriptor generated in the image descriptor generation unit 204 to the bus 102. The reference image descriptor transmitted to the bus 102 may be stored in the storage 106.

The image descriptor determination unit 208 may determine whether an input image descriptor corresponds to a reference image descriptor. In one embodiment, the image descriptor determination unit 208 may calculate a similarity based on distance between characteristic information extracted from partial image data of the input image descriptor and the reference image descriptor. If the similarity is more than a predetermined similarity, the image descriptor determination unit 208 may determine that the input image descriptor corresponds to the reference image descriptor. A wide variety of techniques may be used for generating image descriptors and determining the correspondence between image descriptors. For ease of discussion, further details on the techniques may not be described herein.

If the image descriptor determination unit 208 determines that the input image descriptor matches the reference image descriptor, the control data generation and transmission unit 210 may generate and transmit data for controlling an element (or component) of the communication apparatus 100. As one example, the control data generation and transmission unit 210 may generate and transmit data for controlling the communication apparatus 100 to perform a general answering operation or an automatic answering operation in response to a call setup request message. In one embodiment, if the communication apparatus 100 is a SIP video communication apparatus, the control data generation and transmission unit 210 may generate control data for controlling the transceiver 108 to transmit an acknowledge message (i.e., a 200 OK message) to another SIP video communication apparatus as well as to generate control data for controlling the communication apparatus 100 to prepare packet transmission/receipt for a call connection. In one embodiment, if an incoming call is a video call, the control data generation and transmission unit 210 may also generate and transmit data for controlling the camera 104 to prepare packet transmission/receipt for a video call connection.

Although it has been described herein that image data that the image data receiver 202 received from the camera 104 is in a same state prior to transformation to image descriptors, and the image descriptor generation unit 204 processes the image data received from the camera 104 to generate a reference image descriptor or an input image descriptor, embodiments of the present invention are not limited to such description. In another embodiment, the camera 104 may directly process the obtained image data to generate a reference image descriptor or an input image descriptor and the image data receiver 202 (of the control device 114) may receive the generated reference image descriptor or the generated input image descriptor from the camera 104. Although it has been described that the image data receiver 202 receives a reference image descriptor from the storage 106, embodiments of the present invention are not limited to such description. In one embodiment, the image data receiver 202 (of the control device 114) may receive image data from the storage 106 prior to transformation to image descriptors, and the image data receiver 202 may process the image data to generate reference image descriptors. In another embodiment, the image data receiver 202 (of the control device 114) may receive image data from an external device connected to the communication apparatus 100 for generating reference image descriptors or generating reference image descriptors.

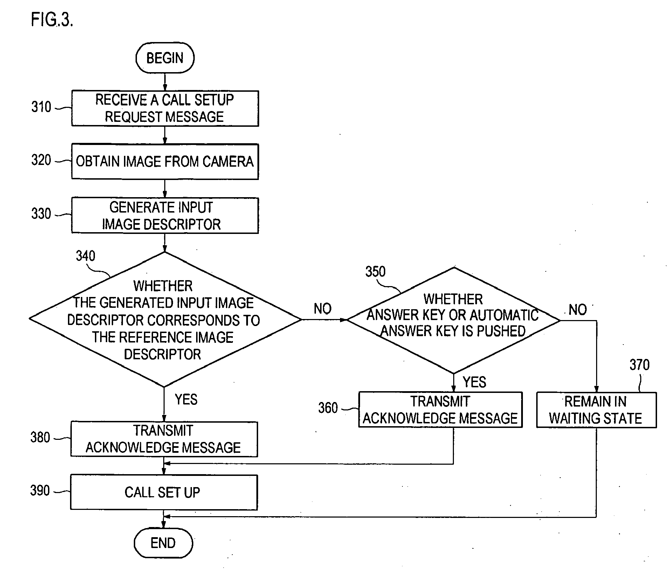

FIG. 3 is a flow chart showing a control method performed in a communicating apparatus when receiving a call setup request message from another communication apparatus according to an example embodiment of the present invention. Operations shown in FIG. 3 are illustrative and may be integrated, separated and/or abbreviated. Other orders of operations may also be provided.

In operation 310, the communication apparatus may receive a call setup request message. For example, if the communication apparatus is a SIP video communication apparatus, the communication apparatus may receive an INVITE message.
The communication apparatus may then power a camera on automatically and control the camera to obtain an image associated with a user of the communication apparatus in operation 320. As one example, the image obtained by the camera may be a movie that includes the user's postures.

In operation 330, the communication apparatus may generate an input image descriptor from the image data obtained from the camera. The communication apparatus may then determine, in operation 340, whether the generated input image descriptor corresponds to the pre-stored reference image descriptor. If it is determined in operation 340 that the input image descriptor does not correspond to the pre-stored reference image descriptor, then the process may proceed on to operation 350.

In operation 350, the communication apparatus may determine whether control data for setting a call is input from a user. As one example, the communication apparatus may determine whether a user pushes any input key, such as an answer key, an automatic answer key or a call transfer key located on a main body of the communication apparatus or a wireless terminal connected to the main body. If it is determined in operation 350 that control data for setting a call is input from a user, then the process may proceed to operation 360 where the communication apparatus may perform any necessary process following the input of the control data by the user. For example, if it is determined in operation 350 that the user pushes an answer key or an automatic answer key, the communication apparatus may transmit, in operation 360, an acknowledge message to another communication apparatus in response to the call setup request message. As one example, if the communication apparatus is a SIP video communication apparatus, the communication apparatus may transmit a 200 OK message to another communication apparatus. On the other hand, if it is determined in operation 350 that control data for setting a call is not input from the user, the process may proceed to operation 370, and the communication apparatus may remain in a waiting state.

If it is determined in operation 340 that the input image descriptor corresponds to the pre-stored reference image descriptor, then the process may proceed to operation 380. In operation 380, the communication apparatus may transmit an acknowledge message to another communication apparatus in response to the call setup request message. As one example, if the communication apparatus is a SIP video communication apparatus, the communication apparatus may transmit a 200 OK message to another communication apparatus. According to one embodiment, if it is determined in operation 340 that the input image descriptor corresponds to the pre-stored reference image descriptor, the communication apparatus may control a display to display that a user is requested to take a given posture prior to proceeding to operation 380. When the given posture is taken, the process may proceed on to operation 380 where the communication apparatus may transmit an acknowledge message to another communication apparatus in response to the call setup request message. The process may proceed to operation 390 where a call may be set up between the communication apparatus and another communication apparatus and the call may be answered or automatically answered.

According to embodiments of the present invention, a user may control operations of a communication apparatus by taking a simple posture in front of a camera of the communication apparatus without pushing any key on a main body of the communication apparatus or a wireless terminal connected to the main body. This may be effective in a situation where a disabled person uses the communication apparatus and/or keys of the apparatus are difficult to push.

Although it has been described that when a communication apparatus receives a call setup request message from another communication apparatus, the communication apparatus may use the image data obtained from a camera to determine whether to acknowledge the call setup request message and control elements of the communication apparatus based on the determination, embodiments are not limited to such description. Embodiments of the present invention may cover various ways on how the communication apparatus may use image data obtained from a camera to control elements of the communication apparatus.

It has been described herein that embodiments of the present invention and a number of functional elements thereof may be embodied in specific embodiments. However, it should be appreciated that embodiments may be embodied as hardware, software, firmware and/or any combination thereof, and/or sub-elements of the foregoing. If embodiments are embodied as software, elements may be computer instructions and/or code segments for implementing any operations. Programs or code segments may be stored in a program product. Alternatively, programs or code segments can be transported via a transportation media or communication link as a computer data signal embodied as a carrier wave or modulated signal by a carrier wave. A machine readable media or processor readable media may include any media that can store or transport information in a readable and executable format by a machine (e.g., a processor or computer).

In one embodiment of the present invention, a communication apparatus may use images obtained from a camera to control operations and the device thereof.

A communication apparatus may be provided that includes a camera for obtaining an image and providing image data of the image, and a control device in communication with the camera for generating an input image descriptor from the image data, for determining whether the generated input image descriptor corresponds to at least one pre-set (or pre-stored) reference image descriptor, and for generating control data for controlling the communication apparatus based on the determination.

A Session Initiation Protocol (SIP) communication apparatus using SIP may be also be provided that includes a camera for obtaining an image and providing image data, and a control device in communication with the camera for generating an input image descriptor from the image data, for determining whether the generated input image descriptor corresponds to at least one pre-set (or pre-stored) reference image descriptor, and for generating control data for controlling the SIP communication apparatus based on the determination.

A control device of a video communication apparatus may be provided (or mounted) with a camera for obtaining an image and providing image data. The control device may include an image descriptor generation unit configured to generate an input image descriptor based on the image data, and an image descriptor determination unit (in communication with the image descriptor generation unit) configured to determine whether the generated input image descriptor corresponds to at least one pre-set reference image descriptor. The control device may also include a control data generation unit (in communication with the image descriptor determination unit) configured to generate control data for controlling the communication apparatus based on the determination.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A communication apparatus comprising:
a camera to obtain an image and to provide image data of the image; and
a control device, in communication with the camera, to provide an input image descriptor based on the image data, to determine whether the provided input image descriptor corresponds to at least one pre-stored reference image descriptor, and to provide control data for controlling the communication apparatus based on the determination.

2. The communication apparatus of claim 1, further comprising:
a storage, in communication with the camera, to store the at least one pre-stored reference image descriptor.

3. The communication apparatus of claim 1, further comprising:
a transceiver, in communication with the control device, to receive the image data for the at least one pre-stored reference image descriptor from an external device.

4. The communication apparatus of claim 3, wherein the image data is movie data.

5. The communication apparatus of claim 1, wherein when the communication apparatus receives a call setup request message from another communication apparatus, the control device determines whether the provided input image descriptor corresponds to the at least one pre-stored reference image descriptor, and the control device provides control data for controlling the communication apparatus to respond to the call setup request message based on the determination of whether the provided input image descriptor corresponds to the at least one pre-stored image descriptor.

6. The communication apparatus of claim 5, wherein the control data is to control the communication apparatus to send an acknowledge message to the another communication apparatus in response to the call setup request message.

7. The communication apparatus of claim 1, wherein the control device generates the control data to control the communication apparatus to request an additional confirmation to a user when the control device determines that the input image descriptor corresponds to the at least one pre-stored reference image descriptor.

8. The communication apparatus of claim 7, further comprising:
a display, in communication with the control device, wherein the control data is to request the additional confirmation to the user for controlling the display to display predetermined text.

9. The communication apparatus of claim 1, further comprising.
an interface, in communication with the control device, to communicate with a network.

10. The communication apparatus of claim 9, wherein the network is one of a public switched telephone network (PSTN), the internet, or a mobile network.

11. A Session Initiation Protocol (SIP) communication apparatus using SIP comprising:
a camera to obtain an image and to provide image data of the image; and
a control device, in communication with the camera, to provide an input image descriptor based on the image data, to determine whether the provided input image descriptor corresponds to at least one pre-stored reference image descriptor, and to provide control data for controlling the communication apparatus based on the determination.

12. The SIP communication apparatus of claim 11, further comprising:
a storage, in communication with the camera, to store the at least one pre-stored reference image descriptor.

13. The SIP communication apparatus of claim 11, further comprising:
a transceiver, in communication with the control device, to receive the image data for the at least one pre-stored reference image descriptor from an external device.

14. The SIP communication apparatus of claim 11, further comprising:
a display, in communication with the control device, wherein the control data is to request an additional confirmation to the user for controlling the display to display text.

15. A control device of a video communication apparatus that includes a camera for obtaining an image and providing image data, the control device comprising:
an image descriptor generation unit to provide an input image descriptor based on the image data;
an image descriptor determination unit, in communication with the image descriptor generation unit, to determine whether the provided input image descriptor corresponds to at least one pre-stored reference image descriptor; and
a control data generation unit, in communication with the image descriptor determination unit, to provide control data for controlling the communication apparatus based on the determination.
